# EUROPEAN PATENT SPECIFICATION

(11) **EP 1 215 079 B1**
(45) Date of publication and mention of the grant of the patent: **16.06.2004**
(21) Application number: 00311250.5
(22) Date of filing: 15.12.2000
(51) Int. Cl.: B60N 2/58

(54) **Fixing for car seat covers**
Befestigung von Kraftfahrzeugsitzbezügen
Fixation de housses pour sièges de véhicule

(43) Date of publication of application: 19.06.2002
(73) Proprietor: YKK France S.a.r.l., Seclin (FR)
(72) Inventor: Murata, Koji, 59471 Seclin (FR)
(74) Representative: Luckhurst, Anthony Henry William

(56) References cited:
- US-A- 3 967 345
- US-A- 5 150 947
- US-A- 5 459 907

## Description

This invention relates to a fastening device for fixing a cover to a car seat.

A car seat cover required to be held firmly in position over the car seat, in a stretched condition. Such a cover tends to be fitted onto a seat by means of a hem, where the cover sits on top of the seat, and the hem fits underneath the seat. The strap of a fastening device is commonly threaded through the hem, then the fastening device is closed and the strap tightened, to hold the cover to the seat. For example, US5459907, which is considered to be the closest prior art, describes an annular fastening device for use with a car seat cover, wherein the fastener comprises a male attachment, a female attachment, and a flexible strap. The male attachment has a series of ratchet teeth, which engage with a resilient tongue in the female attachment if an attempt is made to withdraw the male fastening means.

However, this previously known fastening device has several potential problems. The male attachment may slip out of position with ageing and weakening of the plastic, or with excess temperature. The loose end of the male attachment may trail untidily after the fastener is closed, but the plastic may be too tough to trim this loose end easily with scissors. The fastening device is limited to a narrow range of sizes which it can accommodate, as the strap has an optimal length range in order to allow enough variability for tightening and fastening the cover, but without reducing the flexibility of the greater part of the strap. It may not thus be suitable for use with smaller car seat covers, such as a child seat cover.

This invention involves a new type of fastening device, which improves on these problems.

The fastening device of the invention comprises
a flexible cord,
male fastening means mounted on the cord adjacent one end, and
female fastening means mounted at the other end of the cord,
wherein said female fastening means is fabricated from a moulded plastic material in which a channel is defined between an entry end and an exit end, and the female fastening means comprises an engagement means for engaging with the male fastening means, the engagement means allowing passage of the male fastening means when the male fastening means is pulled through the channel from the entry end to the exit end, but preventing reverse movement of the male fastening means, characterised in that the male fastening means comprises a plurality of stops mounted at intervals along the cord.

Preferably, the female fastening element is mounted onto the cord in such an orientation that the channel lies perpendicular to the direction of the cord as it leaves the female fastening element. This will make the fastening device stronger, as during an attempt to retract the male fastening means from the female fastening element, the force exerted by the male fastening means on the engagement means of the female fastening element will not be a direct force. It is also easier to thread a fastening device wherein the male fastening element is inserted in a perpendicular direction to the cord.

In the preferred embodiment, the engagement means of the female fastening element comprises a resilient tongue, which is pivotally secured to the inner surface of the channel at the entry end to the channel, protruding into the channel towards the exit end of the channel. Preferably, the wall of the channel directly behind the resilient tongue contains a hollow recessed cavity, into which the tongue can be displaced. When a stop is pushed into the channel in the forward direction, the tongue folds towards the channel wall, allowing the stop to pass through. If, however, a stop is pushed backward into the channel, the tongue prevents the stop moving through the channel.

Preferably, the stops of the male fastening element are shaped with a rounded end and a flattened end, whereby the rounded ends make contact with and displace the resilient tongue of the female fastening element when the male fastening element is pulled through the channel from entry to exit end, but the flattened end engages with and prevents displacement of the resilient tongue of the female fastening element when the male fastening element is attempted to be pulled through the channel from exit to entry end. An ideal shape for each stop is a bullet shape, wherein the stops are mounted onto the cord such that the cord runs through the central axis of the bullet. The diameter of each stop is such that the stop can pass through the channel when the tongue is folded towards the channel wall, but the stop is too wide to pass through the channel when the tongue is projecting fully into the channel. It is preferable that the stops of male fastening element are positioned at regular intervals along the cord. The stop-mounted cord thus behaves as a ratchet, wherein each stop corresponds to a tooth of the ratchet, and the teeth engage with the resilient tongue of the female fastening element as the cord is pulled through the channel.

Preferably, the fastening device of the invention further comprises a threading guide mounted at the end of the cord, which makes it easier to insert the cord into the channel. Preferably, the threading guide has an elongated shape, such as a sausage shape or a cylinder, and its diameter is small enough to enable it to pass through the channel without contacting the tongue.

The threading guide and the stops of the male fastening element are preferably moulded onto the cord by insert moulding. The threading guide, the stops of the male fastening element, and the female fastening element are made of a plastic such as polyoxymethylene (POM) or polyacetal, and the cord is made of a flexible material, such as polyethyleneterephthalate (PET).

An embodiment of the present invention will now be described by way of example with reference to the accompanying drawings.

Figure 1 is a side view of the steps involved during operation of the fastening device. Figure 1A shows the arrangement of the fastening device elements on the cord. Figure 1B shows the fastening device after the cord has been cut between the threading guide and the female fastening element. Figure 1C shows the threading guide being inserted into the female fastening element. Figure 1D shows a stop in position just beyond the resilient tongue of the female fastening element, and the configuration of the device when a force is applied to the cord.

Figure 2 shows a top view of the steps involved during operation of the fastening device. Figure 2A shows the fastening device after the cord has been cut between the threading guide and the female fastening element. Figure 2B shows the threading guide being inserted into the female fastening element. Figure 2C shows the cord being pulled through the channel of the female fastening element, with a stop in position just beyond the resilient tongue. Figure 2D shows the configuration of the device when a force is applied to the cord.

Figure 3 shows a cross sectional view through plane A-A of the female fastening element, as indicated in figure 2A.

Figure 4 shows a cross sectional view of the fastening channel, taken along line B-B of figure 3. Figure 4A shows the threading guide in the channel. In figure 4B, a first stop has been pulled through the channel.

Figure 5 shows a car seat cover with a hem, through which the fastening device is threaded. Figure 5A shows the cover before the fastening device is fastened, and figure 5B shows the fastening device after the fastening device has been fastened.

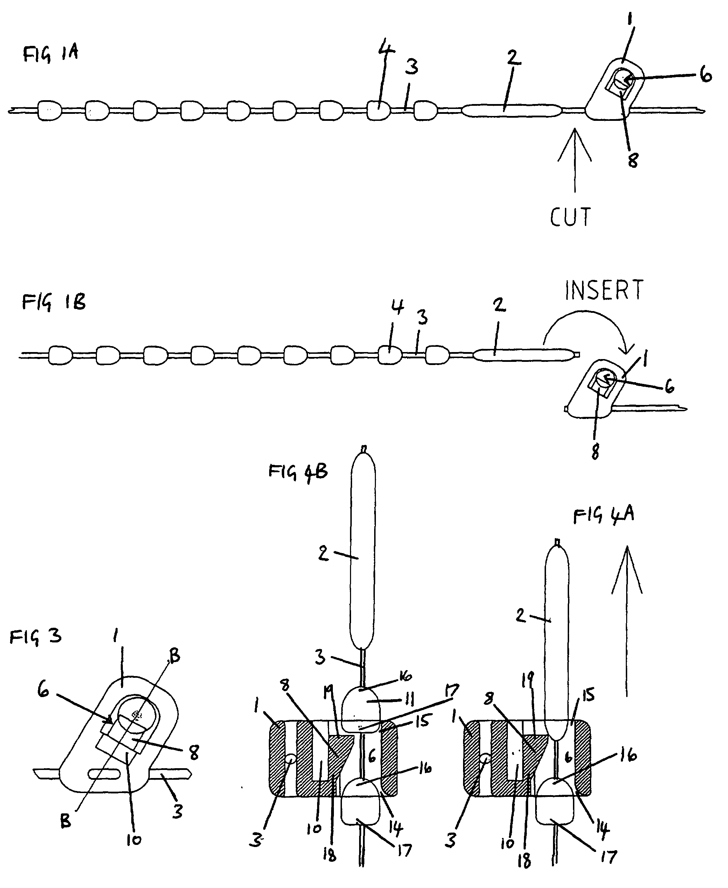

As shown in figure 1A, the fastener comprises a female fastening element (1), a threading guide (2), a flexible cord (3) and a plurality of stops (4). The female fastening element (1), threading guide (2) and stops (4) are all mounted or moulded onto the cord (3). The stops (4) are attached at regular intervals along the cord (3). In this embodiment of the invention, the fastening device is initially provided as a closed loop, and the cord (3) must be cut directly between the threading guide (2) and female fastening element (1), prior to use.

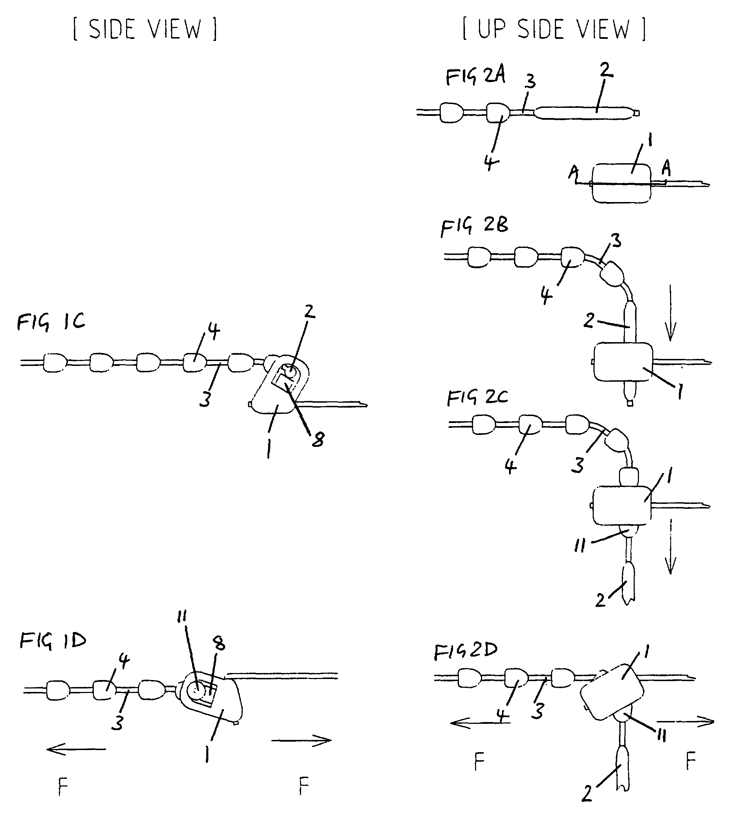

Figure 1B shows the fastening device after it has been cut as shown in figure 1A. The threading guide (2) is now ready to be inserted into the channel (6) of the female fastening element (1). Figure 1C shows the threading guide (2) inside the channel (6). The diameter of the threading guide (2) is small enough to allow it to thread through the channel (6) without interaction with the resilient tongue (8).

Figure 1D shows a stop (11) inside the channel (6), just past the resilient tongue (8). In figure 1D, the fastening device has been subjected to an applied force F, the result of which is to tilt the female fastening element (1) and to engage the stop (11) against the resilient tongue (8), preventing the withdrawal of the stop-mounted end of the cord (3) from the channel (6). The fact that the female fastening element (1) tilts in this way results in the cord (3) doubling back on itself when a force F is applied. This doubling back improves the strength of the fastening device.

Figure 2 shows a top view of the same process as figure 1. Figure 2A corresponds to figure 1B, and shows the fastening device when the threading guide (2) is ready to be inserted into the channel (6). Figure 2B corresponds to figure 1C, and shows the threading guide (2) inside the channel (6). The channel (6) runs through the female fastening element (1) in a direction perpendicular to that in which the cord (3) runs through the female fastening element (1).

Figure 2C shows a first stop (11) inserted almost completely through the channel (6), and a second stop beginning to enter the channel (6). The first stop (11) is sufficiently far through the channel (6) that it has passed the resilient tongue (8). Figure 2D corresponds to figure 1D, showing the first stop (11) and second stop in the same position relative to the channel (6) as was shown in figure 2C, and with a force F applied to the cord (3). The region of the stop-mounted end of the cord (3) just before it enters the channel (6) is approximately co-linear with the region of the opposite end of the cord (3) which exits from the female fastening element (1).

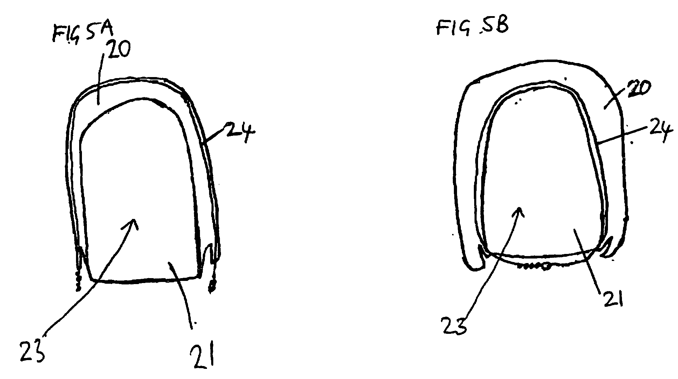

Figure 3 shows a more detailed view of the female fastening element (1). The female fastening element (1) is mounted onto the cord (3), and the direction in which the cord (3) runs inside the female fastening element (1) is perpendicular to the direction of the channel (6). A tongue (8) projects into the channel (6), and on the wall of the channel (6) directly behind the tongue (8), a hollow recessed cavity (10) provides a space into which the tongue (8) can be displaced.

Figure 4 shows the operation of the device in more detail. Figure 4A shows the threading guide (2) inside the channel (6), and almost completely past the tongue (8). Figure 4B shows a first stop (11) pushed through the channel (6) and past the tongue (8), and a second stop which has not yet reached the tongue (8). One end (18) of the tongue (8) is attached to the wall of the channel (6) at the entry end (14) of the channel (6). The other end (19) of the tongue (8) has a flat surface, and projects into the channel (6) towards the exit end (15) of the channel (6). The cavity (10) is located in the wall of the channel (6), directly behind the tongue (8).

The stops (4) are bullet shaped, having a rounded front surface (16) and a flattened rear surface (17). This makes it easy for the front of a stop to displace the tongue (8) into the cavity (10) as it enters the channel (6) from the entry end (14). When an attempt is made to pull the stops (4) back out of the channel (6) again, the flat rear surface (17) of the stop engages with the flat end surface (19) of the tongue (8), providing a barrier which prevents any further movement of the stop in a direction back into the channel (6).

Figure 5 shows a car seat cover, in which a hem (20) is peripheral to an opening (23) of the cover. The hem (20) fits below the car seat, and the remaining part (21) of the cover fits on top of the car seat. A fastening device (24) according to the present invention is shown threaded through the hem (20). The cover is slid onto the seat by means of the opening (23), and the fastening device (24) is then closed and tightened to tension the cover on the seat. In figure 5A this fastening device (24) is unfastened, but in figure 5B, the fastening device (24) has been fastened, forming a loop, although it has not yet been fully tightened.

## Claims

1. A fastening device for fastening a car seat cover to a car seat, comprising
a flexible cord (3),
male fastening means mounted on the cord (3) adjacent one end, and
female fastening means (1) mounted at the other end of the cord (3),
wherein said female fastening means (1) is fabricated from a moulded plastic material in which a channel (6) is defined between an entry end (14) and an exit end (15), and the female fastening means (1) comprises an engagement means for engaging with the male fastening means, the engagement means allowing passage of the male fastening means when the male fastening means is pulled through the channel (6) from the entry end (14) to the exit end (15), but preventing reverse movement of the male fastening means, **characterised in that** the male fastening means comprises a plurality of stops (4) mounted at intervals along the cord (3).

2. A fastening device as described in claim 1, **characterised in that** the female fastening element (1) is mounted onto the cord (3) in such an orientation that the channel (6) lies perpendicular to the direction of the cord (3) as it leaves the female fastening element (1).

3. A fastening device as described in claim 1 or 2, **characterised in that** the engagement means of the female fastening element (1) comprises a resilient tongue (8).

4. A fastening device as described in claim 3, **characterised in that** the resilient tongue (8) is pivotally secured to the inner surface of the channel (6) at the entry end to the channel (6), protruding into the channel (6) towards the exit end of the channel (6).

5. A fastening device as described in claim 4, **characterised in that** the wall of the channel (6) directly behind the resilient tongue (8) contains a hollow recessed cavity (10), into which the tongue (8) can be displaced.

6. A fastening device as described in claim 3, 4 or 5, **characterised in that** said stops (4) of the male fastening element are shaped with a rounded end (16) and a flattened end (17), wherein the rounded end (16) makes contact with and displaces the resilient tongue (8) of the female fastening element (1) when the male fastening means is pulled through the channel (6) from entry end (14) to exit end (15), but the flattened end (17) engages with and prevents displacement of the resilient tongue (8) of the female fastening element (1) when the male fastening means is attempted to be pulled through the channel (6) from exit end (15) to entry end (14).

7. A fastening device as described in claim 6, **characterised in that** said stops (4) of the male fastening means have a bullet shape, wherein they are mounted onto the cord (3) such that the cord (3) runs through the central axis of the bullet.

8. A fastening device as described in any previous claim, **characterised in that** said stops (4) of the male fastening means are positioned at regular intervals along the cord (3).

9. A fastening device as described in any one of claims 1 to 8, **characterised by** a threading guide (2) at the end of the cord (3), the threading guide (2) having an elongate shape, with a diameter which is small enough to enable it to pass through the channel (6) without contacting the tongue (8).

10. A fastening device as described in any previous claim, **characterised in that** the threading guide (2) and the stops (4) of the male fastening means are moulded on the cord (3).

11. A fastening device as described in any previous claim, **characterised in that** the threading guide (2), the stops (4) of the male fastening means, and the female fastening element (1) are made of polyoxymethylene (POM) or polyacetal, and the cord (3) is made from polyethyleneterephthalate (PET).

## Patentansprüche

1. Befestigungsvorrichtung zum Befestigen eines Kraftfahrzeugsitzbezuges auf einem Kraftfahrzeugsitz, umfassend:
eine biegsame Schnur (3),
ein männliches Befestigungsmittel, das an der Schnur (3) neben einem Ende befestigt ist, und
ein weibliches Befestigungsmittel (1), das an dem anderen Ende der Schnur (3) befestigt ist,
wobei das weibliche Befestigungsmittel (1) aus geformtem Kunststoffmaterial hergestellt wird, in dem ein Kanal (6) zwischen einem Eingangsende (14) und einem Ausgangsende (15) definiert ist, und das weibliche Befestigungsmittel (1) ein Eingriffmittel zum Eingriff mit einem männlichen Befestigungsmittel umfasst, wobei das Eingriffmittel den Durchgang des männlichen Befestigungsmittels zulässt, wenn das männliche Befestigungsmittel von dem Eingangsende (14) zum Ausgangsende (15) durch den Kanal (6) gezogen wird, aber ein Zurücklaufen des männlichen Befestigungsmittels verhindert, **dadurch gekennzeichnet, dass** das männliche Befestigungsmittel mehrere Stopper (4) umfasst, die in Abständen entlang der Schnur (3) befestigt sind.

2. Befestigungsvorrichtung nach Anspruch 1, **dadurch gekennzeichnet, dass** das weibliche Befestigungsmittel
(1) so auf der Schnur (3) angeordnet ist, dass der Kanal (6) senkrecht zur Richtung der Schnur (3) liegt, wenn er das weibliche Befestigungselement (1) verlässt.

3. Befestigungsvorrichtung nach Anspruch 1 oder 2, **dadurch gekennzeichnet, dass** das Eingriffmittel des weiblichen Befestigungselementes (1) eine nachgebende Zunge (8) umfasst.

4. Befestigungsmittel nach Anspruch 3, **dadurch gekennzeichnet, dass** die nachgebende Zunge (8) schwenkbar an der Innenfläche des Kanals (6) an dem Eingangsende zu dem Kanal (6) angeordnet ist, der in den Kanal (6) zum Ausgangsende des Kanals (6) hineinragt.

5. Befestigungsvorrichtung nach Anspruch 4, **dadurch gekennzeichnet, dass** die Wand des Kanals (6) direkt hinter der nachgebenden Zunge (8) einen hohl ausgeführten eingezogenen Hohlraum (10) enthält, in den die Zunge (8) versetzt werden kann.

6. Befestigungsvorrichtung nach Anspruch 3, 4 oder 5, **dadurch gekennzeichnet, dass** die Stopper (4) des männlichen Befestigungselementes mit einem abgerundeten Ende (16) und einem abgeflachten Ende (17) ausgeformt sind, wobei das abgerundete Ende (16) die nachgebende Zunge (8) des weiblichen Befestigungselementes (1) berührt und versetzt, wenn das männliche Befestigungselement vom Eingangsende (14) zum Ausgangsende (15) durch den Kanal (6) gezogen wird, aber das abgeflachte Ende (17) mit der nachgebenden Zunge (8) in Eingriff steht und das Versetzen der nachgebenden Zunge (8) des weiblichen Befestigungselementes verhindert, wenn das männliche Befestigungselement vom Ausgangsende (15) zum Ausgangsende (14) durch den Kanal (6) gezogen werden soll.

7. Befestigungsmittel nach Anspruch 6, **dadurch gekennzeichnet, dass** die Stopper (4) der männlichen Befestigungsmittel kugelförmig ausgebildet sind, wobei sie auf der Schnur (3) angeordnet sind, so dass die Schnur (3) durch die Mittelachse der Kugel hindurchläuft.

8. Befestigungsvorrichtung nach einem der vorhergehenden Ansprüche, **dadurch gekennzeichnet, dass** die Stopper
(4) des männlichen Befestigungsmittels in gleichmäßigen Abständen entlang der Schnur (3) angeordnet sind.

9. Befestigungsmittel nach einem der Ansprüche 1 bis 8, **gekennzeichnet durch** eine Fädelführung (2) am Ende der Schnur (3), wobei die Fädelführung (2) eine längliche Form hat, deren Durchmesser klein genug ist, so dass sie **durch** den Kanal (6) hindurchpasst, ohne die Zunge
(8) zu berühren.

10. Befestigungsvorrichtung nach einem der vorhergehenden Ansprüche, **dadurch gekennzeichnet, dass** die Fädelführung (2) und die Stopper (4) des männlichen Befestigungsmittels auf der Schnur (3) angeformt sind.

11. Befestigungsvorrichtung nach einem der vorhergehenden Ansprüche, **dadurch gekennzeichnet, dass** die Fädelführung (2), die Stopper (4) des männlichen Befestigungsmittels und das weibliche Befestigungselement (1) aus Polyoxymethylen (POM) oder Polyacetal und die Schnur (3) aus Polyethyleneterephthalat (PET) hergestellt sind.

## Revendications

1. Dispositif de fixation pour fixer une housse à un siège de véhicule, comprenant un cordon (3) souple, un moyen de fixation mâle monté sur le cordon (3), à proximité d'une extrémité de celui-ci, et un moyen de fixation femelle (1) monté sur l'autre extrémité du cordon (3), dans lequel ledit moyen de fixation femelle (1) est fabriqué à partir d'une matière plastique moulée, dans laquelle un canal (6) est défini entre une extrémité d'entrée (14) et une extrémité de sortie (15), et le moyen de fixation femelle (1) comporte un moyen d'accouplement destiné à entrer en prise avec le moyen de fixation mâle, le moyen d'accouplement autorisant le passage du moyen de fixation mâle lorsque celui-ci est tiré à travers le canal (6), depuis l'extrémité d'entrée (14) jusqu'à l'extrémité de sortie (15), tout en empêchant le mouvement inverse du moyen de fixation mâle, **caractérisé en ce que** le moyen de fixation mâle comprend une pluralité d'éléments d'arrêt (4) montés à intervalles le long du cordon (3).

2. Dispositif de fixation selon la revendication 1, **caractérisé en ce que** l'élément de fixation femelle (1) est monté sur le cordon (3) avec une orientation telle que le canal (6) soit perpendiculaire à l'orientation du cordon (3) lorsque celui-ci sort de l'élément de fixation femelle (1).

3. Dispositif de fixation selon la revendication 1 ou 2, **caractérisé en ce que** le moyen d'accouplement de l'élément de fixation femelle (1) comprend une languette (8) élastique.

4. Dispositif de fixation selon la revendication 3, **caractérisé en ce que** la languette (8) élastique est fixée de façon pivotante à la surface intérieure du canal (6), au niveau de l'extrémité d'entrée du canal (6), et fait saillie dans le canal (6), en direction de l'extrémité de sortie du canal (6).

5. Dispositif de fixation selon la revendication 4, **caractérisé en ce que** la paroi du canal (6) située directement derrière la languette (8) élastique comporte une cavité (10) creuse en retrait, dans laquelle la languette (8) peut être rentrée.

6. Dispositif de fixation selon la revendication 3, 4 ou 5, **caractérisé en ce que** lesdits éléments d'arrêt (4) de l'élément de fixation mâle sont réalisés avec une extrémité arrondie (16) et une extrémité plate (17), l'extrémité arrondie (16) étant en contact avec et déplaçant la languette (8) élastique de l'élément de fixation femelle (1) lorsque le moyen de fixation mâle est tiré à travers le canal (6), de l'extrémité d'entrée (14) vers l'extrémité de sortie (15), mais l'extrémité plate (17) entrant en prise avec la languette (8) élastique de l'élément de fixation femelle (1) et empêchant le déplacement de celle-ci, lorsqu'on tente de tirer le moyen de fixation mâle à travers le canal (6), de l'extrémité de sortie (15) vers l'extrémité d'entrée (14).

7. Dispositif de fixation selon la revendication 6, **caractérisé en ce que** lesdits éléments d'arrêt (4) du moyen de fixation mâle ont la forme de balles et sont montés sur le cordon (3) de manière à ce que le cordon (3) passe par l'axe central de la balle.

8. Dispositif de fixation selon l'une quelconque des revendications précédentes, **caractérisé en ce que** lesdits éléments d'arrêt (4) du moyen de fixation mâle sont placés à intervalles réguliers le long du cordon (3).

9. Dispositif de fixation selon l'une quelconque des revendications 1 à 8, **caractérisé en ce qu'**il comporte un guide d'enfilage (2) à l'extrémité du cordon (3), le guide d'enfilage (2) ayant une forme allongée et un diamètre qui est suffisamment petit pour permettre son passage dans le canal (6), sans entrer en contact avec la languette (8).

10. Dispositif de fixation selon l'une quelconque des revendications précédentes, **caractérisé en ce que** le guide d'enfilage (2) et les éléments d'arrêt (4) du moyen de fixation mâle sont moulés sur le cordon (3).

11. Dispositif de fixation selon l'une quelconque des revendications précédentes, **caractérisé en ce que** le guide d'enfilage (2), les éléments d'arrêt (4) du moyen de fixation mâle et l'élément de fixation femelle (1) sont réalisés en polyoxyméthylène (POM) ou en polyacétal et le cordon (3) est en poly(téréphtalate d'éthylène) (PET).
